# EUROPÄISCHE PATENTSCHRIFT

(11) **EP 1 260 838 B1**
(45) Veröffentlichungstag und Bekanntmachung des Hinweises auf die Patenterteilung: **07.09.2005**
(21) Anmeldenummer: 02090174.0
(22) Anmeldetag: 14.05.2002
(51) Int. Cl.: G02B 6/12, C04B 35/52, C03C 23/00, B23K 26/00, B23K 26/40, B23K 26/06, C04B 41/00

(54) **Verfahren zur direkten Mikrostrukturierung von Materialien**
Process for direct microstructuring of materials
Procédé de microstructuration directe de matériaux

(30) Priorität: 14.05.2001 DE 10125206
(43) Veröffentlichungstag der Anmeldung: 27.11.2002
(73) Patentinhaber: Forschungsverbund Berlin e.V., 12489 Berlin (DE)
(72) Erfinder: Boyle, Mark, 10961 Berlin (DE); Rosenfeld, Akardi, 10409 Berlin (DE); Hertel, Ingolf, 14129 Berlin (DE); Stoian, Razvan, 42000 Saint Etienne (FR); Korn, Georg, 14532 Kleinmachnow (DE); Thoss, Andreas, 13187 Berlin (DE)
(74) Vertreter: Rudolph, Margit

(56) Entgegenhaltungen:
- EP-A- 0 927 595
- DE-A- 4 007 947
- DE-A- 19 960 765
- US-A- 5 656 186
- US-A- 5 861 196

## Beschreibung

Die Erfindung betrifft ein Verfahren zur direkten Mikrostrukturierung von Materialien mittels mindestens eines ultrakurzen Einzelpulses oder einer Pulsfolge mit definiertem Energieeintrag in das Material gemäß dem Oberbegriff des Anspruchs 1 (siehe, z.B., US-A- 5 861 196).

Die direkte Mikrostrukturierung verschiedener Materialien umfasst hier sowohl bei transparenten Materialien die Modifikation des Materials, die zu einer Änderung seiner optischen Eigenschaften (z.B. Transmissionsänderung durch Brechungsindexänderung oder auch massiven Materialabtrag oder Transformation der Phase des Materials) an der bestrahlten Stelle führt, als auch bei nicht transparenten Materialien ebenfalls einen Materialabtrag bzw. eine Phasentransformation, d.h. Übergang von einer Kristallstruktur in eine andere.

Bisher sind dem Stand der Technik nach Verfahren bekannt, bei denen (beispielsweise in LaserOpto 31(3), 91-97 (1999) beschrieben) mit einem Einzelpuls oder einer Pulsfolge definierter Zahl die Modifikation an der Oberfläche bzw. bei transparenten Materialien im Innern erzeugt wird, wobei bei allen verwendeten Laserpulslängen jeweils die Pulsintensität so gewählt wird, dass die Modifikationsschwelle je Einzelpuls überschritten wird. Wie in Phys. Rev. Lett. **74,** 2248-2251 (1995) berichtet wird, hängt die Modifikationsschwelle von der Dauer der verwendeten Impulse und der Wellenlänge ab.

In DE 197 11 049 ist ein Verfahren zur Herstellung von räumlichen Mikrostrukturen in transparenten Materialien mittels Laserbestrahlung beschrieben. Hierbei wird bei einer in Abhängigkeit des zu strukturierenden Materials auf der Materialoberfläche einzustellenden Größe des Fokus des Laserstrahls die Intensität des Laserimpulses unterhalb der Schwelle für die Oberflächenmodifikation und oberhalb der kritischen Intensität, bei der die Selbstfokussierung im Volumen beginnt, und die Tiefenlage der zu erzeugenden Struktur über die Impulslänge und/oder die Impulsenergie eingestellt. Das Verfahren nutzt den nichtlinearen optischen Effelkt der Selbstfokussierung, wodurch im Volumen dieser Materialien Mikrostrukturen erzeugt werden. Das Verfahren ist jedoch nicht geeignet, um Strukturen im Materialinnern auf Größen unter 2 µm zu begrenzen, da aufgrund der Fokussierungsbedingungen bei der Mikrostrukturierung mit Hilfe der Selbstfokussierung der Energieeintrag in das Material oberhalb der Strukturierungsschwelle liegt und nur Einzelpulse benutzt werden.

Wird zur Veränderung des Materials eine Pulsfolge verwendet, so beträgt der Abstand der aufeinanderfolgenden Pulse minimal einige Nanosekunden, wie beispielsweise in CLEO 2000 Technical Digest, CWT4, 375-376 (2000) und ebenda, CFD3, 580 (2000) berichtet, in der Regel jedoch einige Zehntel Millisekunden bis einige Millisekunden, was abhängig ist von der Folgefrequenz des verwendeten Lasersystems.

Für Materialveränderungen im Mikrometerbereich werden aufgrund des geringen Energieeintrags Laserpulse mit einer Dauer von einigen Zehn Pikosekunden bzw. Sub-Pikosekunden, wie in der bereits erwähnten Veröffentlichung Phys. Rev. Lett. **74,** 2248-2251 (1995) berichtet, verwendet.

Bei den dem Stand der Technik nach bekannten Lösungen zur direkten Mikrostrukturierung von Materialien treten Mikrorisse und Spannungen auf, die die Qualität der gewünschten Strukturierung vermindern.

Es ist deshalb Aufgabe der Erfindung, ein Verfahren zur direkten Mikrostrukturierung von Materialien anzugeben, bei dem die genannten Nachteile vermieden werden.

Die Aufgabe wird durch ein Verfahren der eingangs genannten Art dadurch gelöst, dass erfindungsgemäß nacheinander mindestens zwei zeitlich geformte Laserpulse oder Pulszüge auf die Oberfläche des zu bearbeitenden Materials gerichtet werden und der Abstand zweier aufeinanderfolgender Pulse oder Pulszüge kleiner oder gleich Pikosekunden eingestellt wird, sodass der folgende Puls noch in die bewirkte Änderung des ersten Pulses im zu bearbeitenden Material trifft, und Energie und Dauer des Pulses in Abhängigkeit vom zu bearbeitenden Material eingestellt werden.

Das erfindungsgemäße Verfahren, bei dem die in das zu bearbeitende Material eingespeiste Energie auf mehrere Pulse verteilt wird, ermöglicht die Einflussnahme auf die in sehr kurzer Zeit ablaufenden Primärprozesse, indem die relative Intensität und die Pulsdauer der einzelnen aufeinanderfolgenden Pulse und ihr zeitlicher Abstand zueinander variiert wird. Damit ist die Ausnutzung der primären Prozesse möglich, die in jedem Material nach Einwirkung eines intensiven Laserpulses ablaufen. Unter diesen Laserpulsen versteht man z.B. die Anregung einer großen Anzahl von Elektronen aus dem Valenz- ins Leitungsband bei transparenten Materialien (wie beispielsweise in Nucl. Instr. Phys. Res. B 116, 43-48 (1996) beschrieben), sodass der Zustand des transparenten Materials metallähnlich wird. In diesem metallähnlichen Zustand wird das ansonsten transparente, spröde und brüchige Material für sehr kurze Zeit (für die Dauer von Sub-Pikosekunden) duktil, d.h. es wird zäh wie ein Metall. Nun lässt sich das Material mit einem nachfolgenden Laserpuls passender Dauer und Intensität so bearbeiten, dass Risse und Spannungen im Material vermieden werden. Sind die Primärprozesse, hervorgerufen durch den ersten Laserpuls, abgeklungen, kehrt das Material in seinen ursprünglichen Zustand zurück, es ist aber nun an der bestrahlten Stelle in gewünschter Weise modifiziert. Spannungen und Risse, wie sie bei einzelnen Laserpulsen oder Laserpulszügen mit Nanosekunden- oder grösserem Abstand aufgrund der Materialsprödigkeit auftreten, werden in dem erfindungsgemäßen Verfahren vermieden.

In einer erfindungsgemäßen Ausführungsform liegt die Energie jedes Einzelpulses unterhalb der Mikrostrukturierungsschwelle (das ist die minimale Energie, bei der eine Veränderung des Materials - wie eingangs beschrieben - eintritt) und nur die Summe aller Pulse über dieser, sodass ein sehr schonender Energieeintrag in das zu bearbeitende Material erfolgt, wodurch - wie bereits erwähnt - das Auftreten von Spannungen und Rissen minimiert wird. Die Voraussetzung hierfür ist, dass jeweils der nachfolgende Puls von dem vorangegangenen Puls noch etwas "merkt". Das ist nur auf einer Sub-Pikosekunden- oder Pikosekunden-Zeitskala der Fall.

Aufgrund der kurzen Impulsdauem und der kleinen Zeitabstände zwischen den einzelnen Pulsen im erfindungsgemäßen Verfahren ist eine Anregung in sehr kurzlebige instabile Zwischenzustände möglich. Trifft nun ein nachfolgender Puls genau in diesen Zustand, kann durch dessen Anregung ein neuer Zustand erreicht werden, der auf direktem Wege (mit nur einem Laserpuls) nicht ansteuerbar ist.

In einer Ausführungsform der Erfindung ist vorgesehen, Energie und Dauer der aufeinanderfolgenden zeitlich geformten Pulse unterschiedlich einzustellen und damit spezifische Bedingungen für unterschiedliche Materialien zu ermöglichen.

Eine andere Ausführungsform sieht vor, zusätzlich für jeden Einzelpuls eine in Abhängigkeit des zu bearbeitenden Materials beliebige Wellenlänge einzustellen.

Für die Mikrostrukturierung von Quarzglas werden zwei Laserpulse auf die Oberfläche des zu bearbeitenden Materials fokussiert, deren Pulsabstand 0,6 ps und deren Pulsdauer jeweils 0,2 ps beträgt.

Für die Mikrostrukturierung von Graphit werden in einer weiteren Ausführungsform mindestens zwei Laserpulse verwendet, deren Impulslänge kleiner als 0,2 ps und deren Abstand geringer oder gleich 2 ps ist, wobei eine Phasentransformation der Graphitstruktur in eine Diamantstruktur erzeugt wird.

In dem erfindungsgemäßen Verfahren können die ultrakurzen Laserpulse, deren Abstand zweier aufeinanderfolgender Pulse kleiner oder gleich Pikosekunden eingestellt wird, mittels der pulsformenden Methode in einem Kurzpulslaser, vorzugsweise einem CPA(chirped pulse amplification)-Lasersystem (z.B. in OPTICS LETTERS, Vol. 23, No. 20, October 15, 1998, 1612-1614 beschrieben), erzeugt werden, wie in einer anderen Ausführungsform vorgesehen.

Im Ergebnis des erfindungsgemäßen Verfahrens zur direkten Mikrostrukturierung von Materialien können diese Änderungen permanent oder auch nicht permanent sein. Das erfindungsgemäße Verfahren erfordert keine (chemische) Nachbearbeitung der erzielten Strukturänderung.

Weitere Ausführungsformen der Erfindung sind in den Unteransprüchen und in dem folgenden Ausführungsbeispiel angegeben, das anhand von Figuren näher erläutert wird.

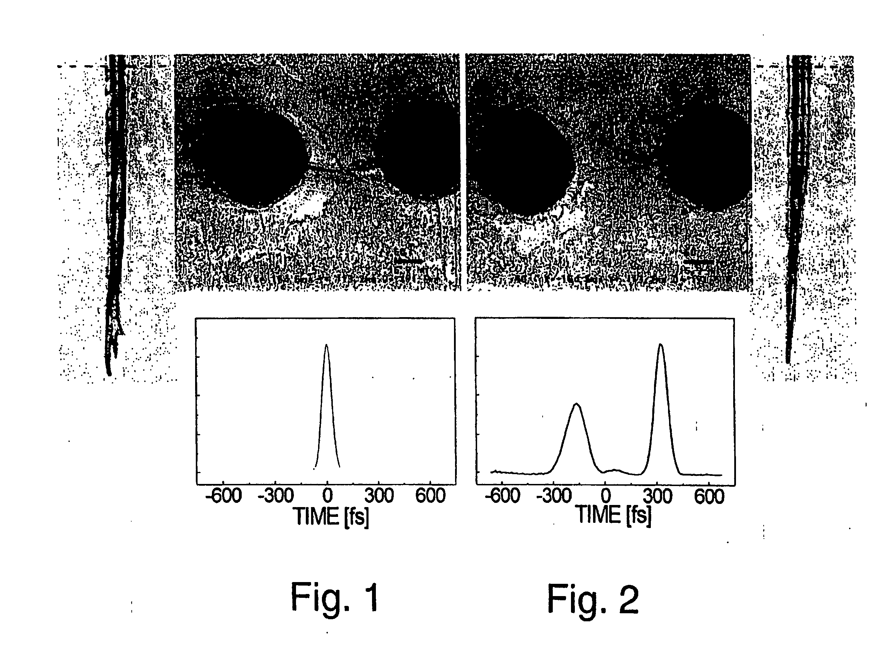

Figur 1 zeigt in einer Mikroskopaufnahme das Ergebnis einer Modifikation von Quarzglas in der Draufsicht und Seitenansicht mit einem Einzelpuls, dessen Verlauf darunter dargestellt ist, Figur 2 zeigt in einer Mikroskopaufnahme die entsprechenden Ansichten der Modifikation mittels eines Doppelpulses.

Für die Modifikation einer Quarzglasscheibe gemäß dem Stand der Technik wird diese mit einem Puls eines Ti-Saphir-Lasers bestrahlt, der eine Grundwellenlänge von 800 nm aufweist. Die Pulsdauer dieses Einzelpulses beträgt 0,2 ps, seine Intensität beträgt ca. 80 J/cm². Erkennbar ist in der Seitenansicht in Fig. 1 eine Filamentierung des Kanals. Diese wird bei der Modifikation mit einem Doppelpuls gemäß dem erfindungsgemäßen Verfahren mit dem o.g. Lasers, dessen Impulslänge, Phase und Amplitude variierbar ist, vermieden. Das Ergebnis ist in Figur 2 erkennbar. Die beiden Pulse werden mit einem Abstand von ca. 0,6 ps auf die Quarzglasscheibe gerichtet. Die Gesamtenergie ist die gleiche wie zur Fig. 1 angegeben. Auf der linken Seite der Mikroskopaufnahme in Fig. 1 sind Risse im Material zu erkennen, diese treten nicht mehr auf bei einer Mikrostrukturierung mit einem Doppelpuls.

## Patentansprüche

1. Verfahren zur direkten Mikrostrukturierung von Materialien mittels mindestens eines ultrakurzen Einzelpulses oder einer Pulsfolge mit definiertem Energieeintrag in das Material, wobei Energie und Dauer des Pulses in Abhängigkeit vom zu bearbeitenden Material eingestellt werden.
**dadurch gekennzeichnet, dass**
nacheinander mindestens zwei zeitlich geformte Laserpulse oder Pulszüge auf die Oberfläche des zu bearbeitenden Materials gerichtet werden und der Abstand zweier aufeinanderfolgender Pulse oder Pulszüge kleiner oder gleich Pikosekunden eingestellt wird, sodass der folgende Puls noch in die bewirkte Änderung des ersten Pulses im zu bearbeitenden Material trifft.

2. Verfahren nach Anspruch 1,
**dadurch gekennzeichnet, dass**
Energie und Dauer der aufeinanderfolgenden zeitlich geformten Pulse unterschiedlich eingestellt werden.

3. Verfahren nach Anspruch 1,
**dadurch gekennzeichnet, dass**
zusätzlich für jeden Einzelpuls eine in Abhängigkeit des zu bearbeitenden Materials beliebige Wellenlänge eingestellt wird.

4. Verfahren nach Anspruch 1,
**dadurch gekennzeichnet, dass**
die Energie jedes Einzelpulses unterhalb der Mikrostrukturierungsschwelle und die Summe aller Pulse über dieser liegt.

5. Verfahren nach Anspruch 1,
**dadurch gekennzeichnet, dass**
die ultrakurzen zeitlich geformten Laserpulse, deren Abstand zweier aufeinanderfolgender Pulse kleiner oder gleich Picosekunden eingestellt wird, mittels der pulsformenden Methode in einem Kurzpulslaser, vorzugsweise einem Chirped Pulse Amplification Lasersystem, erzeugt werden.

6. Verfahren nach Anspruch 1,
**dadurch gekennzeichnet, dass**
für die Mikrostrukturierung von Quarzglas zwei Laserpulse auf die Oberfläche fokussiert werden, deren Pulsabstand 0,6 ps und deren Pulsdauer jeweils 0,2 ps beträgt.

7. Verfahren nach Anspruch 1,
**dadurch gekennzeichnet, dass**
für die Mikrostrukturierung von Graphit mindestens zwei Laserpulse verwendet werden, deren Impulslänge kleiner als 0,2 ps und deren Abstand geringer oder gleich 2 ps ist, wobei eine Phasentransformation der Graphitstruktur in eine Diamantstruktur erzeugt wird.

## Claims

1. Method for the direct microstructuring of materials by means of at least one ultrashort individual pulse or a pulse sequence with a defined energy input into the material, the energy and duration of the pulse being set as a function of the material to be processed,
**characterised in that**
at least two temporally shaped laser pulses or pulse sequences are directed successively onto the surface of the material to be processed and the spacing between two successive pulses or pulse sequences is set to be less than or equal to picoseconds, so that the subsequent pulse arrives in the material to be processed while the change due to the first pulse is still happening.

2. Method according to Claim 1,
**characterised in that**
the energy and duration of the successive temporally shaped pulses are set differently.

3. Method according to Claim 1,
**characterised in that**
an appropriate wavelength is furthermore set for each individual pulse as a function of the material to be processed.

4. Method according to Claim 1,
**characterised in that**
the energy of each individual pulse is lower than the microstructuring threshold, and the sum of all the pulses is higher than it.

5. Method according to Claim 1,
**characterised in that**
the ultrashort temporally shaped laser pulses, whose spacing between two successive pulses is set to be less than or equal to picoseconds, are generated by means of the pulse-shaping method in a short-pulse laser, preferably a chirped pulse amplification laser system.

6. Method according to Claim 1,
**characterised in that**
for the microstructuring of quartz glass, two laser pulses whose pulse spacing is 0.6 ps and whose pulse durations are respectively 0.2 ps are focused onto the surface.

7. Method according to Claim 1,
**characterised in that**
for the microstructuring of graphite, at least two laser pulses are used whose pulse length is less than 0.2 ps and whose spacing is less than or equal to 2 ps, so that a phase transformation of the graphite structure into a diamond structure is produced.

## Revendications

1. Procédé pour microstructurer directement des matériaux à l'aide d'au moins une impulsion unique ultracourte ou d'une succession d'impulsions en apportant une énergie définie dans le matériau, l'énergie et la durée de l'impulsion étant réglées en fonction du matériau à traiter,
**caractérisé en ce qu'**
au moins deux impulsions laser ou suites d'impulsions formées successivement dans le temps sont dirigées l'une après l'autre sur la surface du matériau à traiter, et
l'écart entre deux impulsions ou suites d'impulsions successives est réglé pour être inférieur ou égal à la picoseconde, de sorte que l'impulsion suivante a lieu pendant que se manifeste encore la modification de la première impulsion dans le matériau à traiter.

2. Procédé selon la revendication 1,
**caractérisé en ce que**
l'énergie et la durée des impulsions formées successivement dans le temps sont réglées différemment.

3. Procédé selon la revendication 1,
**caractérisé en ce que**
pour chaque impulsion particulière, une longueur d'onde quelconque est en outre réglée en fonction du matériau à traiter.

4. Procédé selon la revendication 1,
**caractérisé en ce que**
l'énergie de chaque impulsion est inférieure au seuil de microstructuration et la somme de toutes les impulsions est supérieure à ce seuil.

5. Procédé selon la revendication 1,
**caractérisé en ce que**
les impulsions laser ultracourtes, formées successivement dans le temps, dont l'écart entre deux impulsions successives est réglé pour être inférieur ou égal à la picoseconde sont produites dans un laser à impulsions courtes à l'aide de la méthode qui forme des impulsions, de préférence dans un système laser à amplification par compression d'impulsions.

6. Procédé selon la revendication 1,
**caractérisé en ce que**
pour microstructurer le verre de quartz, on concentre à la surface deux impulsions laser dont l'écart d'impulsion est de 0,6 ps et dont la durée d'impulsion est respectivement de 0,2 ps.

7. Procédé selon la revendication 1,
**caractérisé en ce que**
pour microstructurer le graphite, on utilise au moins deux impulsions laser dont la longueur d'impulsion est inférieure à 0,2 ps et dont l'écart d'impulsion est inférieur ou égal à 2 ps, la structure du graphite subit alors une transformation de phase en structure de diamant.
